# EUROPÄISCHE PATENTSCHRIFT

(11) **EP 2 767 635 B1**
(45) Veröffentlichungstag und Bekanntmachung des Hinweises auf die Patenterteilung: **27.02.2019**
(21) Anmeldenummer: 14000516.6
(22) Anmeldetag: 13.02.2014
(51) Int. Cl.: E02B 8/08

(54) **Fischlift und Verfahren zum Betrieb eines Fischlifts**
Fish lift and method for operating a fish lift
Ascenseur à poissons et procédé de fonctionnement d'un ascenseur à poissons

(30) Priorität: 18.02.2013 DE 102013002618; 21.02.2013 DE 102013002910
(43) Veröffentlichungstag der Anmeldung: 20.08.2014
(73) Patentinhaber: Baumann, Georg, 88239 Wangen (DE)
(72) Erfinder: Baumann, Georg, 882396 Wangen (DE); Roth, Andreas, 76227 Karlsruhe (DE)
(74) Vertreter: Otten, Roth, Dobler & Partner mbB Patentanwälte

(56) Entgegenhaltungen:
- KR-B1- 101 067 725
- US-A- 1 591 450
- US-A- 1 680 722
- US-A- 2 119 540
- US-A- 3 377 805
- US-A- 4 431 340
- US-A- 4 904 114

## Beschreibung

Die Erfindung betrifft einen Fischlift und ein Verfahren zum Betrieb eines Fischlifts gemäß dem Oberbegriff des Anspruchs 1 bzw. des Anspruchs 15.

Aus der US 1,591,450 ist ein Fischlift zum Transport von Fischen zwischen einem Oberwasser einer Staustufe und einem Unterwasser einer Staustufe bekannt, welcher einen Schacht und einen Behälter umfasst, wobei der Schacht eine unter einem Niveau des Oberwassers liegende obere Öffnung mit einem oberen Schleusenausgang umfasst, wobei der Schacht eine unter einem Niveau des Unterwassers liegende untere Öffnung mit einem unteren Schleuseneingang umfasst und wobei der Behälter zwischen einer oberen Stellung und einer unteren Stellung verfahrbar ist.

Aus der KR 101 067 725 B1 ist ein Fischlift zum Transport von Fischen zwischen einem Oberwasser einer Staustufe und einem Unterwasser einer Staustufe bekannt, welcher einen Schacht und einen Behälter umfasst, wobei der Behälter zwischen einer oberen Stellung und einer unteren Stellung verfahrbar ist und in einem unteren Bereich des Schachts an Schienen geführt ist.

Aus der US 1,680,722 A ist ein Fischlift zum Transport von Fischen zwischen einem Oberwasser einer Staustufe und einem Unterwasser einer Staustufe bekannt, welcher einen Schacht und einen Behälter umfasst, wobei der Behälter zwischen einer oberen Stellung und einer unteren Stellung verfahrbar ist.

Weiterhin ist aus der US 4,904,114 A eine Aufstiegshilfe für Fische bekannt, in welcher Schwimmsiebe mit dem Wasserstand auf- und abschwimmen.

Aus der US 4,431,340 A ein Fischlift zum Transport von Fischen zwischen einem Oberwasser einer Staustufe und einem Unterwasser einer Staustufe bekannt, welcher einen Schacht und einen Behälter umfasst, wobei der Behälter zwischen einer oberen Stellung und einer unteren Stellung verfahrbar ist.

Schließlich ist aus der US 2 119 540 A ein Fischlift zum Transport von Fischen zwischen einem Oberwasser einer Staustufe und einem Unterwasser einer Staustufe bekannt, welcher einen Schacht und einen Behälter umfasst, wobei der Schacht eine unter einem Niveau des Oberwassers liegende obere Öffnung mit einem oberen Schleusenausgang umfasst, wobei der Schacht eine unter einem Niveau des Unterwassers liegende untere Öffnung mit einem unteren Schleuseneingang umfasst und wobei der Behälter zwischen einer oberen Stellung und einer unteren Stellung verfahrbar ist.

Es ist Aufgabe der Erfindung, einen Fischlift vorzuschlagen, bei welchem ein störungsfreies Heben und Senken des Behälters gewährleistet ist bzw. ein Verfahren zum Betrieb eines Fischlifts vorzuschlagen, bei welchem den Fischen der Weg sowohl in den Behälter als auch aus dem Behälter heraus durch eine Leitströmung gewiesen wird und bei welchem auch ein Absenken des Behälters zu keiner verstärkten Leitströmung in der Einschwimmzone im Unterwasser führt.

Diese Aufgabe wird ausgehend von den Merkmalen des Oberbegriffs des Anspruchs 1 bzw. 13 durch die kennzeichnenden Merkmale des Anspruchs 1 bzw. des Verfahrensanspruch 13 gelöst. In den Unteransprüchen sind vorteilhafte und zweckmäßige Weiterbildungen angegeben.

Bei dem erfindungsgemäßen Fischlift ist der Behälter in dem Schacht an wenigstens zwei Schienen derart geführt, dass in der oberen Stellung, in der unteren Stellung und in jeder zwischen der oberen und der unteren Stellung liegenden Zwischenstellung, welcher der Behälter in Schacht einnehmen kann, ein Kontakt zwischen dem Behälter und einer Innenwand des Schachts vermieden ist. Hierdurch ist sowohl ein Festsetzen des Behälters im Schacht durch verkanten, als auch ein großflächiges Anfrieren des Behälters an die Innenwand des Schachts, als auch eine Verklemmen des Behälters durch zwischen der Innenwand des Schachts und einer Außenwand des Behälters befindliche Ablagerungen oder Fremdkörper zuverlässig vermieden. Kern der Erfindung ist eine definiert Führung des Behälters zwischen dessen oberer Stellung und dessen unterer Stellung im Schacht, bei welcher der Behälter von einer Innenwand des Schachts entkoppelt ist und zu dieser einen den Behälter seitlich umgebenden Freiraum aufweist. Erfindungsgemäß ist es vorgesehen, den Behälter an zwei sich gegenüber liegenden Schienen in dem Schacht zu führen.

Hierdurch werden die Belastungen, welche von dem auf- und abschwimmenden Behälter ausgehen auf zwei Schienen verteilt und es stehen auch zwei Schienenhohlräume zur Anordnung von mechanischen Bauteilen bzw. zur Führung von Wasser zur Verfügung. Bei der Verwendung von zwei Schienen sieht die Erfindung auch vor, eine Schiene räumlich dem schleusenausgang und eine Schiene räumlich dem Schleuseneingang zuzuordnen und den Schleusenausgang und den Schleuseneingang in die Schienen zu integrieren. Hierdurch sind der Schleusenausgang und der Schleuseneingang in dem Schacht geschützt und in kompakter Bauweise angeordnet.
Weiterhin ist es vorgesehen, den Behälter mit einem Transportraum auszustatten, wobei der Behälter eine erste seitliche Öffnung und eine zweite seitliche Öffnung in seiner Wandung aufweist und diese von außen in den Transportraum führen, wobei die seitlichen Öffnungen derart angeordnet sind, dass diese in der oberen Stellung des Behälters unter dem Niveau des Oberwassers liegen und dass diese in der unteren Stellung des Behälters unter dem Niveau des Unterwassers liegen. Hierdurch werden an dem Behälter zwei Unterwassereingänge bzw. Unterwasserausgänge geschaffen, welche von Fischen benutzbar sind.

Gemäß der Erfindung ist es vorgesehen, die erste seitliche Öffnung des Behälters in der oberen Stellung des Behälters zu dem Schleusenausgang und der oberen Öffnung des Schachts derart auszurichten, dass bei geöffnetem Schleusenausgang eine gegenüber einem den Behälter umgebenden Innenraum des Schachts abgeschirmte Verbindung zum Oberwasser besteht, und die zweite seitliche Öffnung des Behälters in der unteren Stellung des Behälters zu dem Schleuseneingang und der unteren Öffnung des Schachts derart auszurichten, dass bei geöffnetem Schleuseneingang eine gegenüber dem den Behälter umgebenden Innenraum des Schachts abgeschirmte Verbindung zum Unterwasser besteht. Hierdurch ist in dem Fischlift mit dem Behälter ein Kolben gebildet, mit welchem abhängig von einem Wasserstand in dem Schacht in seiner oberen Stellung bei geöffnetem Schleusenausgang eine gegenüber einem Innenraum des Schachts, welcher den Behälter umgibt, gekapselte Verbindung in das Oberwasser hergestellt ist und mit welchem abhängig von einem Wasserstand in dem Schacht in seiner unteren Stellung bei geöffnetem Schleuseneingang eine gegenüber dem Innenraum des Schachts, welcher den Behälter umgibt, gekapselte Verbindung in das Unterwasser hergestellt ist, so dass ein Einschwimmen oder Ausschwimmen der Fische in den Innenraum des Schachts, welcher den Behälter umgibt, wirksam unterbunden ist.

Weiterhin ist es vorgesehen, die erste seitliche öffnung des Behälters zu dem Transportraum in jeder Zwischenstellung des Behälters gegenüber dem den Behälter umgebenden Innenraum des Schachts durch die erste Schiene zu verschließen und die zweite seitliche Öffnung des Behälters zu dem Transportraum in jeder Zwischenstellung des Behälters gegenüber dem den Behälter umgebenden Innenraum des Schachts durch die zweite Schiene zu verschließen. Hierdurch wird auch in den Zwischenstellungen ein Einschwimmen oder Ausschwimmen der Fische in den Innenraum des Schachts, welcher den Behälter umgibt, wirksam verhindert.

Erfindungsgemäß umfasst der Fischlift einen Ablass- und Spülkanal, wobei der Ablass- und Spülkanal den Innenraum des Schachts mit dem Unterwasser unter Umgehung einer im Unterwasser vor dem Schleuseneingang liegenden Einschwimmzone derart verbindet, dass unter dem Behälter in dem Schacht befindliches Wasser beim Absenken des Behälters aus dem Schacht ableitbar ist und hierdurch ein Bodenbereich des Schachts spülbar ist. Hierdurch ist es möglich, dem Aufbau von Materialanhäufungen, welche den Betrieb des Fischlifts und insbesondere das Absenken des Behälters in die unteren Stellung behindern, wirksam vorzubeugen und so Wartungsintervalle groß zu halten und Betriebstörungen zu vermeiden.

Die Erfindung sieht vor, mit der ersten Schiene eine Führung für Leitwasser einer ersten Leitwasserversorgung zu bildet, wobei die erste Leitwasserversorgung insbesondere einen Versorgungskanal, ein Versorgungskanalventil und eine Leitwasserdüse und/oder einen Rechen umfasst. Durch eine Integration eines Teils der ersten Leitwasserversorgung in die erste Schiene wird ein kompakter Aufbau des Fischlifts gewährleistet, da die Schiene einen Mehrfachnutzen aufweist, da diese nämlich außen zur Führung des Behälters und innen zur Führung von Wasser dient.

Die Erfindung sieht auch vor, den Schleusenausgang in der ersten Schiene anzuordnen, wobei der Schleusenausgang ein Sperrglied, Betätigungsmittel für das Sperrglied und einen Rohrabschnitt umfasst. Hierdurch wird ebenfalls eine Mehrfachnutzung der Schiene vorgenommen und somit ein kompakter Aufbau des Fischlifts erreicht.

Ebenso sieht die Erfindung vor, den Schleuseneingang in der zweiten Schiene anzuordnen, wobei der Schleuseneingang ein Sperrglied, Betätigungsmittel für das Sperrglied und einen Rohrabschnitt umfasst. Auch hierdurch wird eine Mehrfachnutzung der Schiene vorgenommen und somit ein kompakter Aufbau des Fischlifts erreicht.

Gemäß der Erfindung ist der Behälter als Schwimmbehälter ausgebildet und umfasst insbesondere wenigstens einen Schwimmkörper, durch welchen der Behälter seinen Auftrieb erhält, wobei der Schwimmkörper insbesondere als Luftkammer ausgebildet ist. Durch die Ausbildung des Behälters als Schwimmkörper ist es möglich, den Behälter allein über eine Regelung des Wasserstandes in dem Schacht zu bewegen, so dass bei dem erfindungsgemäßen Fischlift auf eine wartungsanfällige Hebe- und Senkmechanik verzichtet werden kann. Insbesondere ist es auch vorgesehen, den bzw. die Schwimmkörper als geschäumte Körper auszuführen. Bei derartigen Schwimmkörpern erfährt der Behälter auch bei einer Beschädigung eines Raums, in welchem der bzw. die Schwimmkörper angeordnet sind, noch Auftrieb, so dass eine Funktion des Fischlifts weiterhin gegeben ist.

Es ist erfindungsgemäß auch vorgesehen, den Fischlift mit einer zweiten Leitwasserversorgung auszustatten, wobei die zweite Leitwasserversorgung einen Versorgungskanal und insbesondere auch ein Versorgungskanalventil umfasst, wobei der Versorgungskanal derart stromabwärts vor dem Schleuseneingang mündet, dass im Unterwasser auch dann eine Leitströmung aufrecht erhalten werden kann, wenn der Schleuseneingang geschlossen ist. Durch eine derartige Leitwasserversorgung ist es selbst bei Wartungsarbeiten an dem Fischlift möglich, in einer Einschwimmzone des Unterwassers eine Leitströmung aufrecht zu erhalten.

Weiterhin ist es vorgesehen, den Fischlift mit einem Rückhaltemittel, insbesondere mit einem Anschlag auszustatten, durch welches der Behälter derart unterhalb des Niveaus des Oberwassers gehalten wird, dass zuströmendes Oberwasser insbesondere durch eine Öffnung in einer Decke des Behälters nach oben aus dem Behälter heraus quillt. Hierdurch wird bei geöffnetem Schleusenausgang in der oberen Stellung des Behälters auch im Transportraum des Behälters eine Leitströmung ausgebildet, so dass die in dem Transportraum befindlichen Fische, welche stromaufwärts wandern, motiviert werden, den Behälter in das Oberwasser zu verlassen. Hierdurch ist es möglich, eine Verweilzeit des Behälters in der oberen Stellung vergleichsweise kurz zu halten und mit dem Fischlift durch kurze Taktzeiten eine hohe Transportportleistung zu erreichen.

Erfindungsgemäß umfasst die erste Schiene eine obere Schienenöffnung, welche durch den Schleusenausgang verschließbar ist, und umfasst die zweite Schiene eine untere Schienenöffnung, welche durch den Schleuseneingang verschließbar ist. Hierdurch ist es möglich, den Innenraum des Schachts je nach Anforderung gegenüber dem Unterwasser bzw. dem Oberwasser abzuschotten.

Die Erfindung sieht auch vor, die erste Schiene mit einer unteren Schienenöffnung auszustatten, in welcher die Leitwasserdüse und/oder der Rechen der ersten Leitwasserversorgung angeordnet ist. Hierdurch ist der Hohlraum der ersten Schiene gegenüber dem Transportraum des Behälters derart abgeschottet, dass ein Einschwimmen von Fischen in den Hohlraum der ersten Schiene verhindert ist, so dass die Fische keinen Weg einschlagen können, welcher ungeeignet für diese ist.

Bei dem erfindungsgemäßen Verfahren ist es vorgesehen, dass bei geöffnetem Schleuseneingang und bei in der unteren Stellung befindlichem Behälter der Transportraum des Behälters über die erste Leitwasserversorgung mit Oberwasser durchströmt wird, wobei das Oberwasser durch die Leitwasserdüse in die erste Öffnung des Behälters einströmt und durch die zweite Öffnung des Behälters und den Schleuseneingang in die vor dem Schleuseneingang liegende Einschwimmzone ausströmt und sich so die Leitströmung einstellt, welche die Fische aus der Einschwimmzone in den Behälter leitet, dass zum Anheben des Behälters in die obere Stellung der Schleuseneingang geschlossen wird, so dass sich der Wasserstand in dem Innenraum des Schachts erhöht und der Behälter nach oben schwimmt, dass nach dem Schließen des Schleuseneingangs unter Verwendung der zweiten Leitwasserversorgung Oberwasser vor dem Schleuseneingang in den Einschwimmbereich geleitet wird, um den Einschwimmbereich für die Fische attraktiv zu halten, dass der Behälter bei steigendem Wasserstand in dem Schacht so lange nach oben schwimmt bis dieser durch das Rückhaltemittel in seiner oberen Stellung blockiert wird, dass in der oberen Stellung der Schleusenausgang geöffnet wird, so dass sich durch das in den Transportraum einströmende und über die obere Öffnung des Behälters überlaufende Oberwasser die Leitströmung einstellt, welche die Fische zum Ausschwimmen in das Oberwasser veranlasst, dass nach einem Schließen des Schleusenausgangs zum Absenken des Behälters aus der oberen Stellung in die untere Stellung der Ablass- und Spülkanal geöffnet wird, durch welchen das in dem Innenraum des Schachts befindliche Wasser an der Einschwimmzone vorbei in das Unterwasser abgeleitet wird und dass nach dem vollständigen Absenken des Behälters in die untere Stellung der Schleuseneingang geöffnet, die erste Leitwasserversorgung aktiviert und die zweite Leitwasserversorgung deaktiviert wird. Durch ein derartiges Verfahren ist in der Einschwimmzone des Unterwassers die Aufrechterhaltung einer konstanten Leitströmung gewährleistet. Weiterhin erhalten die Fische durch dieses Verfahren auch in der oberen Stellung des Behälters eine Leitströmung, welche das Ausschwimmen aus dem Behälter erlaubt. Zusätzlich ist durch dieses Verfahren eine zu starke Leitströmung in der Einschwimmzone auch beim Absenken des Behälters sicher vermieden.

Der Begriff Fische umfasst im Sinne der Erfindung auch andere Lebewesen, in deren Natur es liegt stromaufwärts oder stromabwärts zu wandern.

Im Sinne der Erfindung wird unter einem Ventil ein Absperrmittel verstanden, welches geeignet ist einen Wasserstrom zu regeln.

Weitere Einzelheiten der Erfindung werden in der Zeichnung anhand von schematisch dargestellten Ausführungsbeispielen beschreiben.

Hierbei zeigt:
- Figur 1:: eine Schnittsansicht eines erfindungsgemäßen Fischlifts, wobei der Behälter in einer unteren Stellung steht;
- Figur 2:: eine Detailansicht der Figur 1;
- Figur 3:: eine Schnittsansicht des aus der Figur 1 bekannten Fischlifts, wobei der Behälter in einer oberen Stellung steht;
- Figur 4:: eine Detailansicht der Figur 3;
- Figur 5:: eine weitere Detailansicht der Figur 3;
- Figur 6:: eine Draufsicht auf den in den Figuren 1 bis 5 gezeigten Fischlift;
- Figur 7a, 7b:: eine Ausführungsvariante eines Rechens in zwei Ansichten;
- Figur 8a, 8b:: zwei Ansichten des in der Figur 1 gezeigten Doppelschiebers und
- Figur 9:: eine Ausführungsvariante des Behälters in geschnittener und schematischer Ansicht.

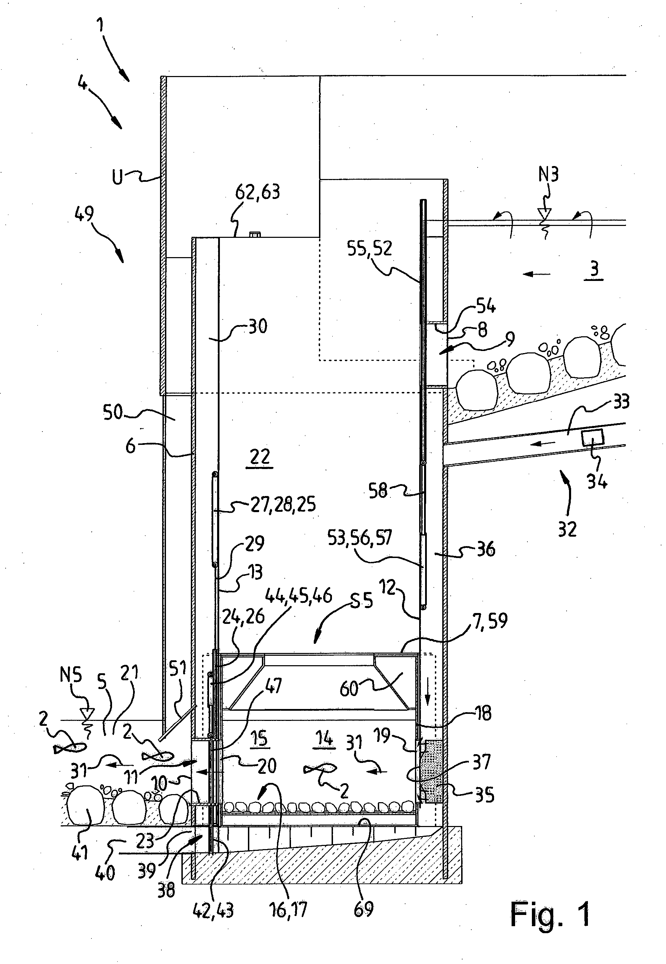

In der Figur 1 ist in geschnittener Seitenansicht ein erfindungsgemäßer Fischlift 1 zum Transport von Fischen 2 zwischen einem Oberwasser 3 einer Staustufe 4 und einem Unterwasser 5 der Staustufe 4 gezeigt. Der Fischlift 1 umfasst einen Schacht 6 und einen Behälter 7. Hierbei umfasst der Schacht 6 eine unter einem Niveau N3 des Oberwassers 3 liegende obere Öffnung 8 mit einem oberen Schleusenausgang 9.

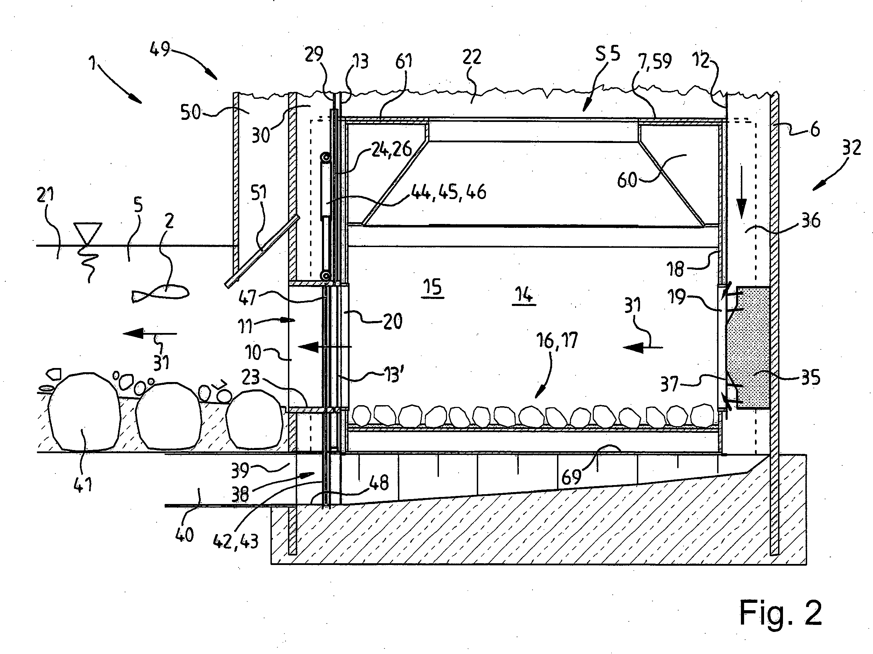

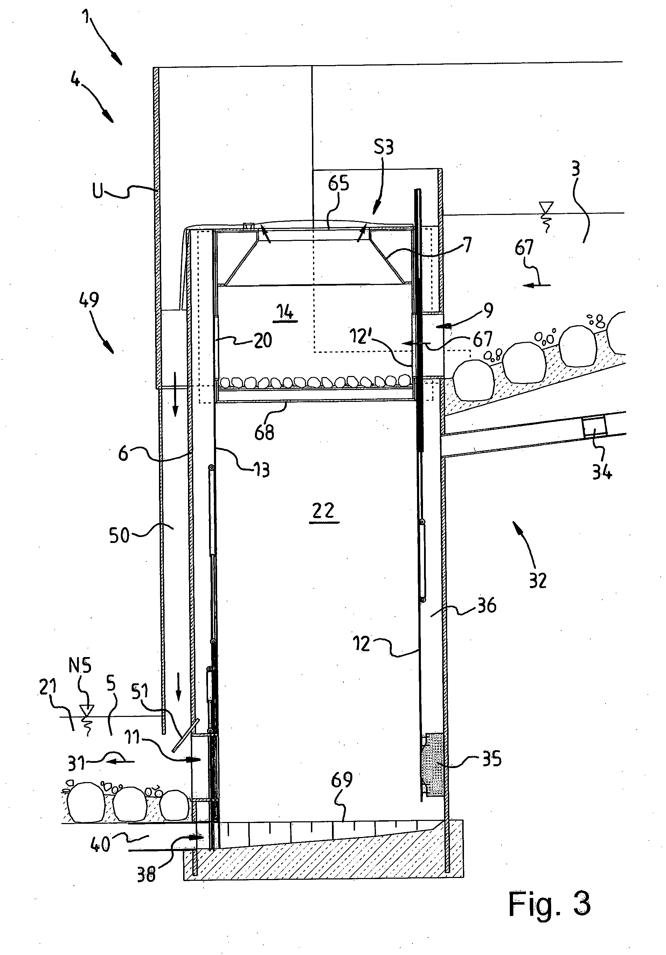

Weiterhin umfasst der Schacht 6 eine unter einem Niveau N5 des Unterwassers 5 liegende untere Öffnung 10 mit einem unteren Schleuseneingang 11. Die Figur 2 zeigt den Fischlift 1 im Bereich des unteren Schleuseneingangs 11 vergrößert. Der Behälter 7 ist zwischen einer in der Figur 3 gezeigten oberen Stellung S3 und einer in der Figur 1 gezeigten unteren Stellung S5 verfahrbar. In dem Schacht 6 ist der Behälter 7 an einer ersten Schiene 12 und einer zweiten Schiene 13 geführt. Die beiden Schienen 12, 13 sind gegenüberliegend angeordnet. Der Behälter 7, welcher in der Figur 1 bzw. 2 in seiner unteren Stellung S5 gezeigt ist, umfasst einen Transportraum 14. Der Transportraum 14 bildet ein Becken 15. Das Becken 15 weist einen Beckenboden 16 auf, auf welchem Sohlsubstrat 17 angeordnet ist. Hierdurch stellt das Becken 15 für die Fische 2 und andere Lebewesen eine weitgehend natürliche Umgebung dar. In seiner Wandung 18 weist der Behälter 7 eine erste seitliche Öffnung 19 und eine zweite seitliche Öffnung 20 auf, welche in den Transportraum 14 führen. Die zweite seitliche Öffnung 20, welche in das Unterwasser 5 bzw. eine Einschwimmzone 21 des Unterwassers 5 führt liegt unter einem Niveau N5 des Unterwassers 5. Die zweite seitliche Öffnung 20 des Behälters 7 liegt in der unteren Stellung S5 des Behälters 7 dem Schleuseneingang 11 und der unteren Öffnung 10 des Schachts 6 derart gegenüber, dass bei geöffnetem Schleuseneingang 11 eine gegenüber dem den Behälter 7 umgebenden Innenraum 22 des Schachts 6 abgeschirmte Verbindung zum Unterwasser 5 besteht. Der Schleuseneingang 11 ist in der zweiten Schiene 13 ausgebildet, wobei die zweite Schiene 13 eine auf die Öffnung 20 des Behälters ausgerichtete untere Schienenöffnung 13' aufweist. Hierbei umfasst der Schleuseneingang 11 die in der zweiten Schiene 13 ausgeführte Öffnung 10 in Form eines Rohrabschnitts 23, ein Sperrglied 24 und Betätigungsmittel 25. Das Sperrglied 24 ist als Schieber 26 ausgebildet und die Betätigungsmittel 25 umfassen Aktuatoren 27, 28 und ein Gestänge 29. In der Figur 1 steht der Schieber 26 in einer hochgezogenen Stellung, so dass die Fische 2 aus dem Unterwasser 5 in den Transportraum 14 des Behälters 7 einschwimmen können. Das Sperrglied 24 und das Betätigungsmittel 25 des Schleuseneingangs 11 sind in einem Hohlraum 30 der zweiten Schiene 13 angeordnet und liegen somit geschützt in dem Schacht 6. In dem Innenraum 22 des Behälters 7 und in der Einschwimmzone 21 des Unterwassers 5 wird bei in der unteren Stellung S5 stehendem Behälter 7 und offenem Schleuseneingang 11 eine Leitströmung 31 über eine erste Leitwasserversorgung 32 hergestellt. Die erste Leitwasserversorgung 31 umfasst einen Versorgungskanal 33, ein Versorgungskanalventil 34 und eine Leitwasserdüse 35. Der Versorgungskanal 33 wird aus dem Oberwasser 3 gespeist, wobei die durch den Versorgungskanal 33 zuströmende Wassermenge durch das Versorgungskanalventil 34 geregelt wird. Der Versorgungskanal 33 mündet in einen Hohlraum 36 der ersten Schiene 12 und strömt in diesem nach unten zu der Leitwasserdüse 35, welche der ersten Seitlichen Öffnung 19 des Behälters 7 gegenüberliegt. Durch die Leitwasserdüsen 35 und durch eine Öffnung 37 in der Schiene 12 strömt aus dem Oberwasser 3 Wasser in den Transportraum 14 des Behälters 7 und durch dessen zweite Öffnung 20 und den geöffneten Schleuseneingang 11 in das Unterwasser 5 bzw. die Einschwimmzone 21.

Der Fischlift 1 umfasst weiterhin noch eine Ablassschleuse 38, durch welche eine in dem Schacht 6 ausgebildete Ablassöffnung 39 verschließbar ist. Die Ablassöffnung 39 ist unterhalb der unteren Öffnung 10 angeordnet und führt in einen Ablass- und Spülkanal 40, welcher unter einem Boden 41 der Einschwimmzone 21 vorbei an der Einschwimmzone 21 in das Unterwasser 5 führt. In der in der Figur 1 bzw. 2 gezeigten unteren Stellung S5 des Behälters 7 ist die Ablassschleuse 38 durch ein Sperrglied 42, welches als Schieber 43 ausgebildet ist, verschlossen. Das Sperrglied 42 wird mit Hilfe von Betätigungsmitteln 44 bewegt, wobei die Betätigungsmittel 44 Aktuatoren 45, 46 und ein Gestänge 47 umfassen. Die Ablassöffnung 39 ist durch einen Rohrabschnitt 48 (siehe Figur 2) gebildet. Das Sperrglied 42 und die Betätigungsmittel 44 sind in dem Hohlraum 30 der zweiten Schiene 13 angeordnet. Solange der Behälter 7 in der unteren Stellung S5 steht, ist ein Öffnen der Ablassschleuse 38 allenfalls dann vorgesehen, wenn der Hohlraum 36 der ersten Schiene 12 gespült werden muss. Durch ein öffnen der Ablassschleuse 38 kann dann an der Leitwasserdüse 35 vorbei Wasser unter dem Behälter 7 abströmen, ohne dass die im Behälter 7 und in der Einschwimmzone 21 ausgebildete Leitströmung 31 dadurch stärker bzw. zu stark wird.

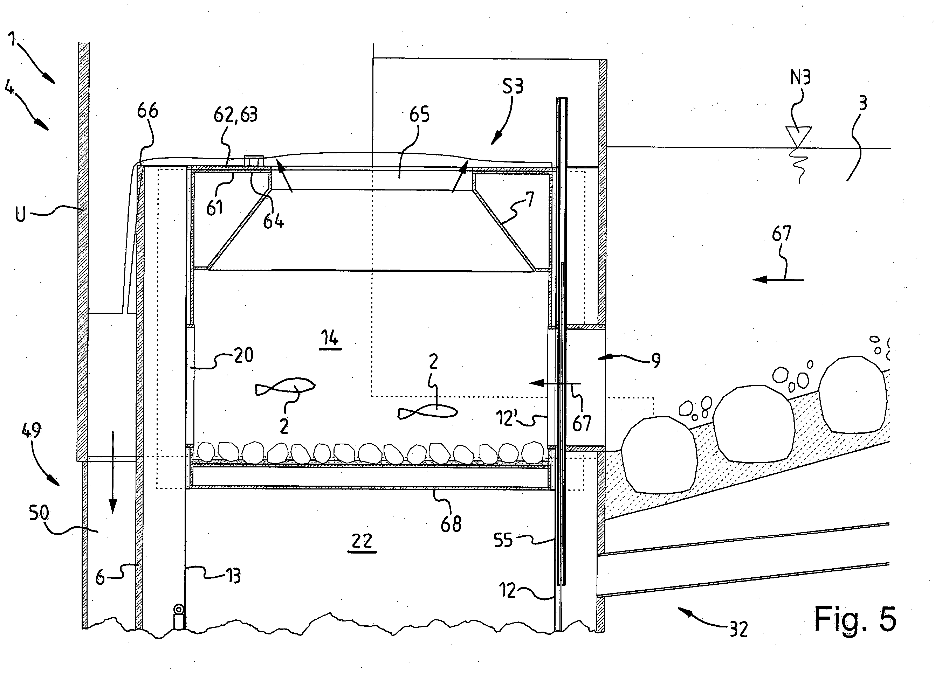

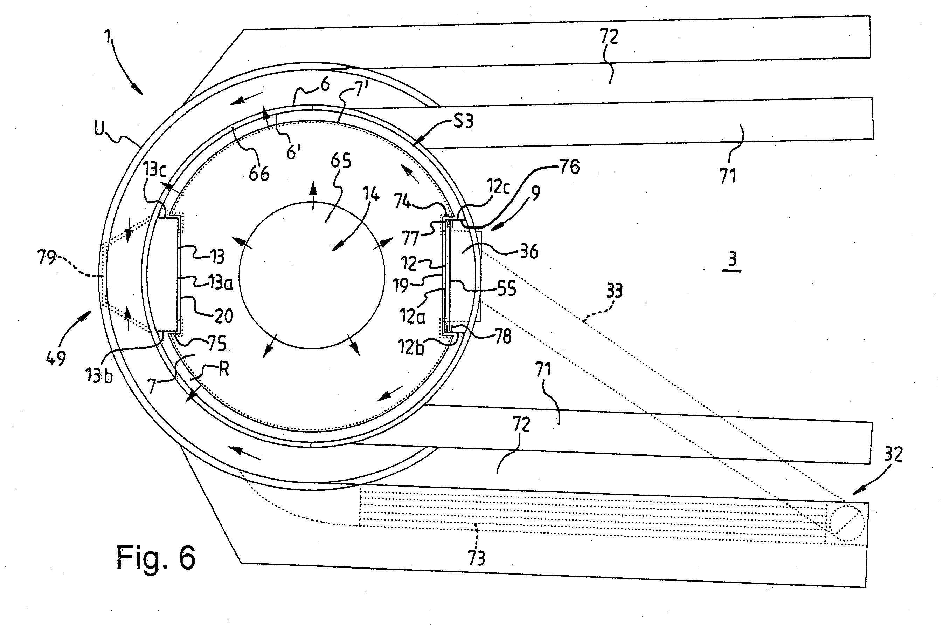

Der Fischlift 1 umfasst weiterhin eine zweite Leitwasserversorgung 49. Diese umfasst einen Versorgungskanal 50, welcher aus dem Oberwasser 3 gespeist wird und ein Versorgungskanalventil 51. Der Versorgungskanal 50 der zweiten Leitwasserversorgung 49 mündet vor dem unteren Schleuseneingang 11 in der Einschwimmzone 21 des Unterwassers 5. In der in den Figuren 1 bzw. 2 gezeigten unteren Stellung S5 des Behälters 7 ist das Versorgungskanalventil 51 geschlossen, so dass durch die zweite Leitwasserversorgung 49 kein Oberwasser 3 in das Unterwasser 5 geleitet wird. Bezüglich der Zufuhr von Oberwasser 3 in den Versorgungskanal 50 wird auf die Figur 6 und die zugehörige Beschreibung verwiesen. Wie aus der Figur 1 weiter hervorgeht ist der Schleusenausgang 9 verschlossen, wenn der Behälter 7 in der unteren Stellung S5 steht. Der Schleusenausgang 9 umfasst ein Sperrglied 52 und Betätigungsmittel 53, wobei seine Öffnung 8 durch einen Rohrabschnitt 54 gebildet ist, welcher das Oberwasser 3 durch eine auf die obere Öffnung 8 des Schachts 6 und auf die Öffnung 19 des in der oberen Stellung S3 stehenden Behälters 7 ausgerichtete obere Schienenöffnung 12' mit dem Innenraum 22 des Schachts 6 verbindet. Das Sperrglied 52 ist als Schieber 55 ausgebildet und die Betätigungsmittel 53 sind durch Aktuatoren 56, 57 und eine Gestänge 58 gebildet (siehe Figur 1). Durch den geschlossenen Schleusenausgang 9 wird das Einströmen von Oberwasser 3 in den Innenraum 22 des Schachts 6 verhindert. Der Behälter 7 ist als Schwimmbehälter 59 ausgebildet und umfasst einen Schwimmkörper 60. Hierdurch erhält der Behälter 7 bei steigendem Wasserstand in dem Innenraum 22 des Schachts 6 derart starken Auftrieb, dass dieser an den Schienen 12, 13 geführt aus seiner unteren Stellung S5 aufschwimmt und mit steigendem Wasserstand im Schacht 6 aus der in der Figur 1 bzw. 2 gezeigten unteren Stellung S5 in die in der Figur 3 bzw. 5 gezeigte obere Stellung S3 bewegt wird. Hierbei wird einen steigender Wasserstand in dem Schacht 6 dadurch erzeugt, dass der untere Schleuseneingang 11 durch den Schieber 26 geschlossen wird und weiterhin über die erste Leitwasserversorgung 32 Oberwasser 3 zugeleitet wird, wobei die Ablassschleuse 38 geschlossen bleibt. Dem Versorgungskanal 50 der zweiten Leitwasserversorgung 49 wird Oberwasser 3 über eine Umfangswand U zugeführt, welche überströmendes Oberwasser 3 auffängt.

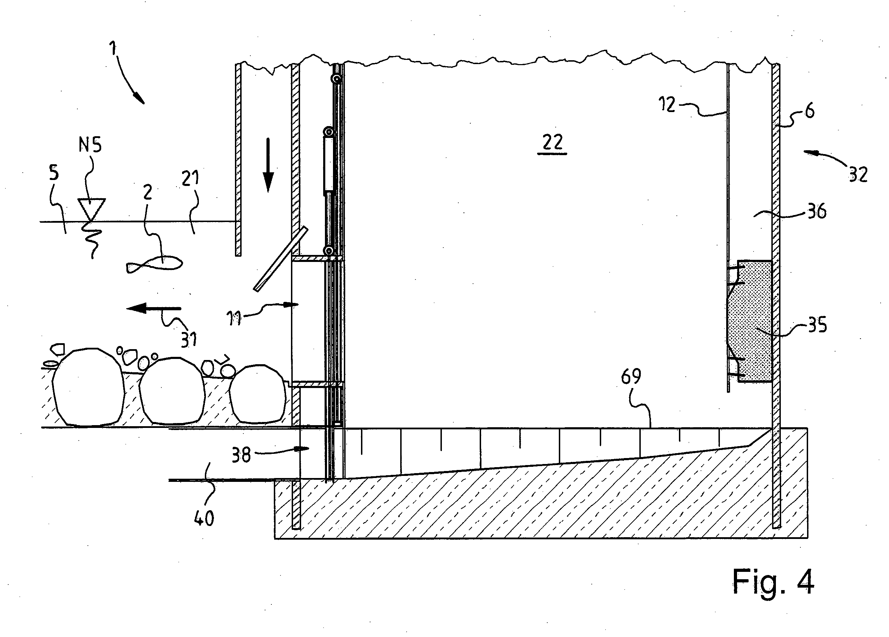

In der Figur 3 ist der Fischlift 1 wie in der Figur 1 in geschnittener Seitenansicht dargestellt, wobei der Behälter 7 des Fischlifts 1 in der Figur 3 in seiner oberen Stellung S3 steht. Die Figur 4 zeigt den Fischlift 1 im Bereich des unteren Schleuseneingangs 11 vergrößert. Die Figur 5 zeigt den Fischlift 1 im Bereich des oberen Schleusenausgangs 9 vergrößert. Die obere Stellung S3 hat der Behälter 7 dann erreicht, wenn der Wasserstand in dem Innenraum 22 des Schachts 6 so hoch ist, dass der schwimmende Behälter 7 mit seiner Oberseite 61 gegen einen den Schacht 6 nach oben begrenzendes Rückhaltemittel 62, welches als Anschlag 63 ausgebildet ist, anschwimmt und durch dieses an einer weiteren, nach oben gerichteten Hubbewegung gehindert wird. Sobald der Behälter 7 an dem Anschlag 63 anliegt kann der obere Schleusenausgang 9 geöffnet werden, so dass Oberwasser 3 in den Transportraum 14 des Behälters 7 einströmt. Eine Decke 64 des Behälters 7, welche die Oberseite 61 bildet, weist eine dritte Öffnung 65 auf, durch welche der Transportraum 14 des Behälters 7 von oben zugänglich ist. Da der Behälter 7 durch den Anschlag 63 mit seiner Oberseite 61 unterhalb des Niveaus N3 des Oberwassers 3 gehalten wird, quillt Oberwasser 3, welches durch den oberen Schleusenausgang 9 in den Transportraum 14 einströmt durch die Öffnung 65 nach oben aus dem Behälter 7 heraus. Das überquellende Oberwasser 3 fließt über eine Oberkante 66 des Schachts 6 und wird von der Umfangswand U aufgehalten und dem Versorgungskanal 50 der zweiten Leitwasserversorgung 49 zugeführt, wobei überquellendes Wasser zeichnerisch durch eine dünne Linie angedeutet ist. Hierdurch stellt sich in dem Transportraum 14 nach dem öffnen des Schleusenausgangs 9 eine Leitströmung 67 ein, durch welche die Fische 2 aus dem Transportraum 14 heraus in das Oberwasser 3 geleitet werden. Solange der Behälter 7 in seiner oberen Stellung S3 steht, ist das Versorgungskanalventil 34 der ersten Leitwasserversorgung 32 geschlossen.

Gemäß einer Ausführungsvariante ist es auch vorgesehen, das Versorgungskanalventil 34 leicht geöffnet zu halten, um Leckverluste am unteren Schleuseneingang 11 oder an der Ablassschleuse 38 zu kompensieren und den Behälter 7 konstant an dem Anschlag 63 zu halten.

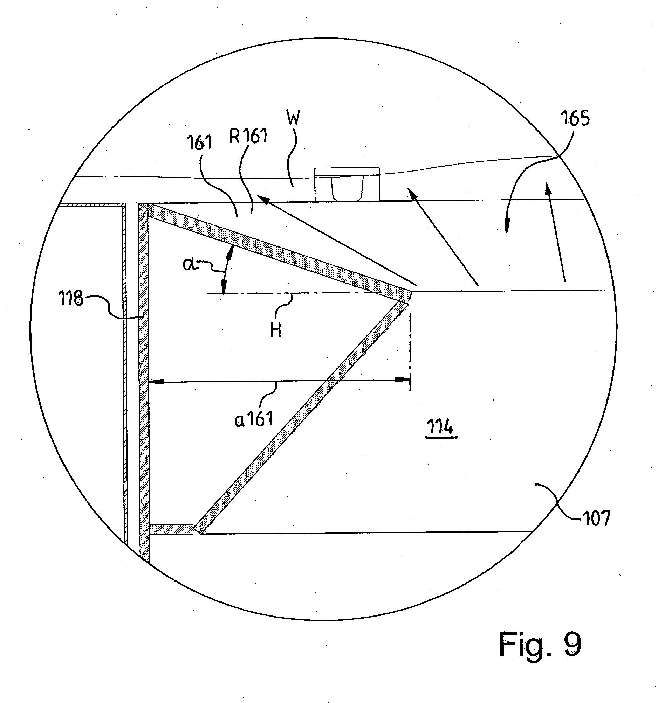

Als Ausführungsvariante zu dem in den Figuren 1, 2, 3, 5 und 6 gezeigten Behälter ist in der Figur 9 in schematischer Schnittdarstellung ein Ausschnitt eines Behälters 107 gezeigt. Dieser Behälter 107 ist dadurch gekennzeichnet, dass zwischen einer Öffnung 165 des Behälters 107 und einer seitlich umlaufenden Wandung 118 des Behälters 107 eine Oberseite 161 des Behälters 107 angeordnet ist, welche als eine die Öffnung 165 kreisringförmig umlaufende Rampe R161 ausgebildet ist, welche von der Öffnung 165 zu der Wandung 118 ansteigt und insbesondere absatzfrei an die Wandung 118 anschließt. Hierbei weist die Rampe R161 zu einer Horizontalen H eine Neigung von 10° < α < 45° und insbesondere 15° < α < 30° auf. Durch die Rampe R161 wird in dem Betriebszustand, in welchem Wasser W aus dem Behälter 107 überquillt, sicher gestellt, dass Fische bzw. Lebewesen, welche dem Strom des überströmenden Wassers folgen wollen, die Oberseite 161 bzw. die Rampe R161 nicht einfach überspringen können und beim Kontakt mit der Rampe R161 das Vorhaben, dem überquellenden Wasser zu folgen, einstellen und auf der Rampe R161 in die Öffnung 165 zurückrutschen, um sich in dem Transportraum 114 des Behälters 107 aufzuhalten bis dieser in der unteren Stellung steht und der Weg zum Unterwasser freigegeben ist oder in der oberen Stellung des Behälters 107 in das Oberwasser ausschwimmen. Hierbei ist die ringförmige Rampe R161 so bemessen, dass die Öffnung 165 in Draufsicht betrachtet zu der Wandung 118 umlaufend einen Abstand a161 von mehreren Dezimetern aufweist. Hierdurch werden auch Fische mit größerer Sprungkraft daran gehindert, den Behälter 107 mit dem überquellenden Wasser zu verlassen.

In der oberen Stellung S3 ist die seitliche Öffnung 20 des Behälters 7 genauso wie auf dem Weg des Behälters 7 von seiner unteren Stellung S5 in seine obere Stellung S3 durch die zweite Schiene 13 verschlossen, so dass die in dem Transportraum 14 befindlichen Fische 2 diesen nicht über die Öffnung 20 verlassen können. Im Unterwasser 5 wird die Leitströmung 31 während des Hochfahrens des Behälters 7 und während dessen Verweilen in der oberen Stellung 3 über die zweite Leitwasserversorgung 49 aufrechterhalten. Hierzu ist das Versorgungskanalventil 51 geöffnet. Das Versorgungskanalventil 51 und der Versorgungskanal 50 sind bezüglich ihres Öffnungsquerschnitts so gestaltet, dass Fische, welche den Transportraum 14 in der oberen Stellung S3 des Behälters 7 über die Öffnung 65 verlassen, unverletzt wieder in das Unterwasser 5 gelangen.

Zum Absenken des Behälters 7 aus der oberen Stellung S3, welches nach einer Verweilzeit erfolgt, in welcher die Fische 2 den Transportraum 14 in das Oberwasser 3 verlassen haben, wird zunächst der obere Schleusenausgang 9 geschlossen, wobei Fische 2, welche stromabwärts wandern, während der Verweildauer in den Transportraum 14 einschwimmen können. Nach dem Schließen des oberen Schleusenausgangs 9 wird die zweite Leitwasserversorgung 49 weiterhin durch stromaufwärts vor dem Schacht 6 überströmendes Oberwasser 3 gespeist, so das die Leitströmung 31 in dem Unterwasser 5 unabhängig davon aufrecht erhalten wird, ob Oberwasser 3 aus dem Transportraum 14 des Behälters 7 überquillt oder nicht. Nach dem Schließen des oberen Schleusenausgangs 9 wird nun die Ablassschleuse 38 geöffnet um den Wasserspiegel in dem Innenraum 22 des Schachts 6 abzusenken bis sich der an den Schienen 12, 13 geführte, schwimmende Behälter 7 wieder in seiner in der Figur 1 gezeigten unteren Stellung S5 befindet, in welcher dieser mit einer Unterseite 68 auf einem Gitterboden 69 des Schachts 6 aufliegt. Dadurch dass das in dem Innenraum 22 des Schachts 6 befindliche Wasser durch den Ablass- und Spülkanal 40 an der Einschwimmzone 21 vorbei in das Unterwasser 5 geleitet wird, wird verhindert, dass die Leitströmung 31 im Unterwasser 5 zu stark wird und die stromaufwärts wandernden Fische 2 von einer Fortbewegung in Richtung des unteren Schleuseneingangs 11 abhält. Durch die beim Absenken des Behälters 7 entstehenden hohen Fließgeschwindigkeiten des abströmenden Wassers wird der Schacht 6 von Ablagerungen und Fremdkörpern gereinigt und werden diese.durch die Ablassschleuse 38 ausgeschwemmt.

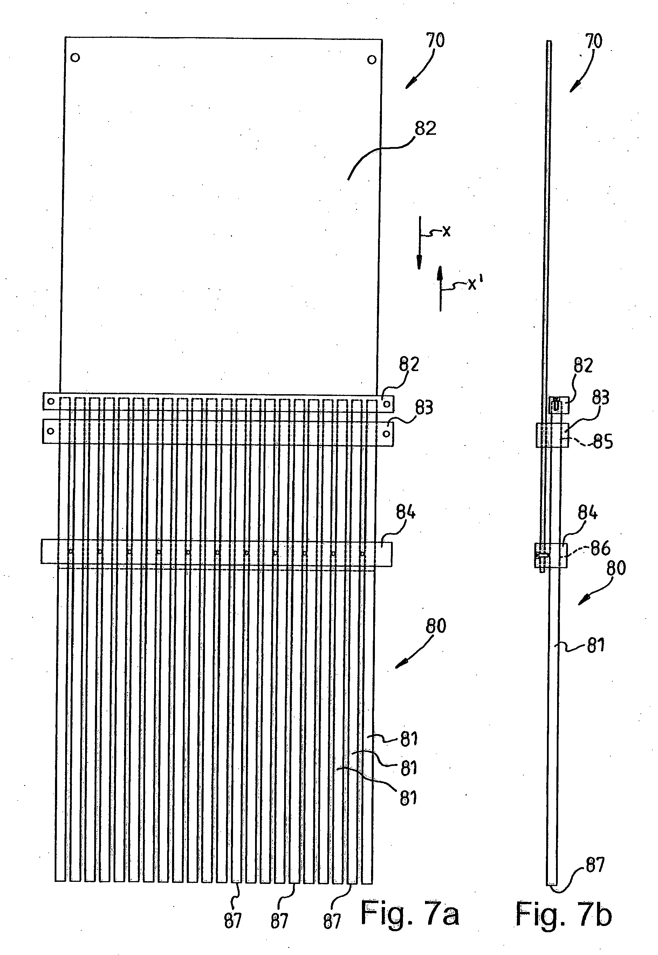

Gemäß einer Ausführungsvariante ist es auch vorgesehen beim Absenken des Behälters 7 auch die erste Leitwasserversorgung 32 voll in Betrieb zu nehmen und durchzuspülen. Hierbei ist es auch vorgesehen, statt der Leitwasserdüse 35 einen in den Figuren 7a und 7b gezeigten Rechen 70 in die erste Leitwasserversorgung 32 zu integrieren, wobei der Rechen 70 die Fische 2 genauso wie die Leitwasserdüse 35 von einem einschwimmen in den Hohlraum 36 der ersten Schiene 12 hindert.

Der Gitterboden 69 ermöglicht sowohl ein Abströmen von in dem Innenraum 22.des Schachts 6 befindlichem Wasser als auch ein Abströmen von über den Hohlraum 36 der Schiene 12 zugeführtem Wasser unter dem auf dem Gitterboden 69 aufliegenden Behälter 7, so dass der Spülvorgang der ersten Leitwasserversorgung 32 bei Bedarf auch fortgesetzt oder begonnen werden kann, wenn der Behälter 7 bereits wieder auf dem Gitterboden 69 des Schachts 6 liegt.

Um ein Einschwimmen der Fische 2 aus der Einschwimmzone 21 des Unterwassers 5 in den Transportraum 14 des Behälters 6 bzw. ein Ausschwimmen von stromabwärts wandernden Fischen 2 in das Unterwasser 5 wieder zu ermöglichen, wird der untere Schleuseneingang 11 wieder geöffnet, die Ablassschleuse 38 - falls diese noch geöffnet ist - geschlossen, die erste Leitwasserversorgung 32 - falls noch nicht aktiv - aktiviert und die zweite Leitwasserversorgung 49 abgestellt, so dass sich wieder eine von der Leitwasserdüse 35 ausgehende Leitströmung 31 einstellt. Hierbei ist die Reihenfolge der einzelnen öffnungs- und Schließvorgänge derart vorzunehmen, dass sowohl die Leitströmung 67 im Oberwasser 3 als auch die Leitströmung 31 im Unterwasser 5 weitgehend ununterbrochen bleibt, so dass die Leitströmung einen für die Strömungsgeschwindigkeit vorgegebnen Minimalwert nicht unterschreitet und einen für die Strömungsgeschwindigkeit vorgegebnen Maximalwert nicht überschreitet. Bei der Abwärtsbewegung des Behälters 7 aus der in der Figur 3 gezeigten oberen Stellung S3 in die in der Figur 1 gezeigte untere Stellung S5 sind die seitlichen Öffnungen 19, 20 des Behälters 7 wie bei der Aufwärtsbewegung durch die Schienen 12 bzw. 13 verschlossen.

Bei der vorstehenden Beschreibung wurde grundsätzlich von der Situation ausgegangen, dass die Fische 2 stromaufwärts wandern. Entsprechend dieser Sichtweise ist der untere Schleusenzugang als Schleuseneingang und der obere schleusenzugang als Schleusenausgang bezeichnet. Selbstverständlich ist der Fischlift auch - wie oben bereits erwähnt - dazu geeignet, Fische, welche stromabwärts wandern, zu transportieren.

In der Figur 6 ist in schematischer Ansicht eine Draufsicht auf den in den Figuren 1 bis 5 gezeigten Fischlift 1 dargestellt. Der Fischlift 1 umfasst neben den erwähnten Bauteilen wie dem Schacht 6, dem Behälter 7, der Umfangswand U, der ersten Leitwasserversorgung 32 und der zweiten Leitwasserversorgung 49 auch ein Streichwehr 71. Mittels des Streichwehrs 71 wird zuströmendes Oberwasser 3 in einen in Draufsicht von oben U-förmig zwischen dem Schacht 6 und der Umwandung U verlaufenden Kanal 72 geleitet, aus welchem die erste Leitwasserversorgung 32 und die zweite Leitwasserversorgung 49 gespeist werden. In diesen Kanal 72 wird auch das Oberwasser 3 geleitet, welche bei in der oberen Stellung S3 stehendem Behälter 7 und geöffnetem Schleusenausgang 9 aus dem Transportraum 14 des Behälters 7 durch die Öffnung 65 überquillt. Verdeckt liegende Kanten sind in der Figur 6 mit gestrichelten Linien dargestellt, wobei mit diesen im wesentlichen der Versorgungskanal 33 der erste Leitwasserversorgung 32 und ein Zufuhrkanal 73 gezeigt sind, welcher den Kanal 72 mit dem Versorgungskanal 33 verbindet. In der Figur 6 sind weiterhin die beiden Schienen 12 und 13 gezeigt, an welchem der Behälter 7 geführt ist. Beide Schienen 12, 13 sind aus Edelstahl ausgeführt und weisen eine Stirnseite 12a bzw. 13a und Seitenflanken 12b, 12c bzw. 13b, 13c auf. Der Behälter 7 weist zu den gegenüberliegenden Schienen 12,'13 hin Führungsnuten 74, 75 auf, welche die Stirnseiten 12a bzw. 13a übergreifen. Die gegenüberliegenden seitlichen Öffnungen 19, 20 des Behälters 7 liegen jeweils den Stirnseiten 12a bzw. 13a der Schienen 12 bzw. 13 gegenüber und werden überall dort, wo die Schienen 12, 13 keinen Schienenöffnungen Öffnungen 12', 13' bzw. 37 (siehe Figur 2 und 5) aufweisen, durch diese verschlossen. In den Hohlraum 36 der ersten Schiene 12 ist in der Figur 6 exemplarisch der Schieber 55 des Schleusenausgangs 9 dargestellt, welcher in an einer Innenseite 76 der Schiene 12 ausgebildeten Führungen 77, 78 geführt ist. Weiterhin ist neben der zweiten Schiene 13 mit gestrichelten Linien noch ein Einlauf 79 des Versorgungskanals der zweiten Leitwasserversorgung dargestellt. Mit Pfeilen ist in der Figur 6 symbolisiert wie aus dem Behälter 7 überquellendes Oberwasser 3 über die Oberkante 66 des Schachts 6 in den Kanal 72 geleitet wird und von diesem zur Erhaltung der Leitströmung im Unterwasser der zweiten Leitwasserversorgung zugeführt wird. Weiterhin ist in der Draufsicht erkennbar wie der Behälter 7 mit seiner Außenwand 7' an den Schienen 12, 13 umlaufend beanstandet zu einer Innenwand 6' des Schachts 6 geführt ist, so dass ein nur durch die Schienen 12, 13 unterbrochener Ringspalt R zwischen dem Behälter 7 und dem Schacht 6 ausgebildet wird und eine Berührung zwischen der Außenwand 7' des Behälters 7 und der Innenwand 6' des Schachts 6 vermieden ist.

In den Figuren 7a und 7b ist der oben bereits erwähnte Rechen 70 in einer Vorderansicht (Figur 7a) und in einer Seitenansicht von links (Figur 7b) gezeigt. Der Rechen 70 umfasst eine Gitterstruktur 80 aus einer Vielzahl von nur exemplarisch mit Bezugszeichen bezeichneten Streben 81, welche in einem Querbalken 82 fixiert sind. Weiterhin umfasst der Rechen eine Schieberplatte 82, welche über einen ersten Kamm 83 und einen zweiten Kamm 84 an den Streben 81 geführt ist.

Zur Reinigung der Gitterstruktur 80 ist es vorgesehen, die Schieberplatte 82 durch nicht dargestellte Antriebsmittel zunächst in eine Pfeilrichtung x nach unten zu verfahren, um mit den Kämmen 83 und 84 Anhaftungen und durch die Gitterstruktur 80 zurückgehaltene Fremdkörper von der Gitterstruktur 80 abzustreifen. Hierbei weisen die Kämme 83, 84 eine Vielzahl von Bohrungen 85, 86 auf, durch welche die Streben 81 geführt sind. Beim Reinigungsvorgang wird der unteren Kamm 84 soweit in die Pfeilrichtung x verfahren bis dieser freie Enden 87 der Streben 81 erreicht hat. Danach werden die Kämmen 83, 84 mittel der Schieberplatte 82 in eine der Pfeilrichtung x entgegen gesetzte Pfeilrichtung x' nach oben gezogen, um die Gitterstruktur 80 wieder frei zu geben. Der beschriebene Reinigungsvorgang wird durchgeführt, wenn die erste Leitwasserversorgung aktiviert ist und wenn die Ablassschleuse geöffnet ist, so dass die abgestreiften Anhaftungen und Fremdkörper durch die Ablassschleuse an dem Einschwimmbereich vorbei in das Unterwasser ausgespült werden.

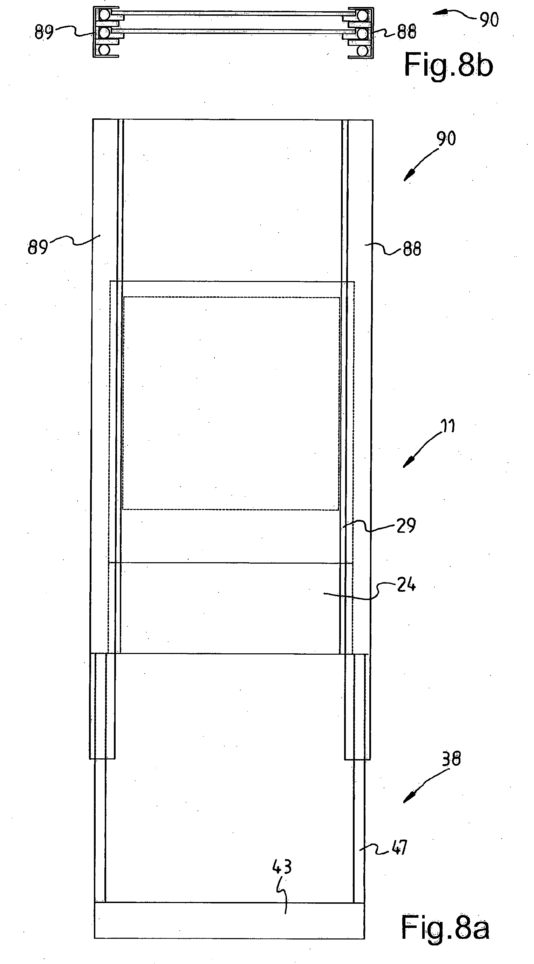

In der Figur 8a sind in Alleinstellung der Schieber 43 und das Gestänge 47 der Ablassschleuse 38 und der Schieber 24 und das Gestänge 29 des Schleuseneingangs 11 gezeigt, sowie zwei dreispurige Führungsschiene 88, 89. Der in der Figur 8a gezeigte, aus den Schiebern 43 und 24 gebildete Doppelschieber 90 ist in der Figur 8b in Draufsicht gezeigt.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche.

### Bezugszeichenliste:

- 1: Fischlift
- 2: Fisch
- 3: Oberwasser
- 4: Staustufe
- 5: Unterwasser
- 6: Schacht
- 6': Innenwand von 6
- 7: Behälter
- 7': Außenwand von 7
- N3: Niveau N3 des Oberwassers 3
- 8: obere Öffnung des Schachts 6
- 9: oberer Schleusenausgang
- N5: Niveau N5 des Unterwassers 5
- 10: untere Öffnung des Schachts 6
- 11: unterer Schleuseneingang
- S3: obere Stellung des Behälters 7
- S5: untere Stellung des Behälters 7
- 12: erste Schiene des Schachts 6
- 12': obere Schienenöffnung von 12
- 12a, 13a: Stirnseite von 12
- 12b, 12c: Seitenflanke von 12
- 13: zweiten Schiene 13
- 13': untere Schienenöffnung von 13
- 13a: Stirnseite von 13
- 13b, 13c: Seitenflanke 13
- 14: Transportraum in 7
- 15: Becken in 7
- 16: Beckenboden von 15
- 17: Sohlsubstrat
- 18: Wandung des Behälters 7
- 19: erste seitliche Öffnung in 7
- 20: zweite seitliche Öffnung in 7
- 21: Einschwimmzone im Unterwasser 5
- 22: Innenraum des Schachts 6
- 23: Rohrabschnitt von 11
- 24: Sperrglied von 11
- 25: Betätigungsmittel von 11
- 26: Schieber von 11
- 27, 28: Aktuator
- 29: Gestänge
- 30: Hohlraum in der zweiten Schiene 13
- 31: Leitströmung
- 32: erste Leitwasserversorgung
- 33: Versorgungskanal von 32
- 34: Versorgungskanalventil von 32
- 35: Leitwasserdüse von 32
- 36: Hohlraum in der ersten Schiene 12
- 37: untere Schienenöffnung in 12
- 38: Ablassschleuse
- 39: Ablassöffnung von 38
- 40: Ablass- und Spülkanal von 38
- 41: Boden der Einschwimmzone 21
- 42: Sperrglied von 38
- 43: Schieber von 38
- 44: Betätigungsmitteln von 38
- 45, 46: Aktuator von 38
- 47: Gestänge von 38
- 48: Rohrabschnitt von 38
- 49: zweite Leitwasserversorgung
- 50: Versorgungskanal von 49
- 51: Versorgungskanalventil von 49
- 52: Sperrglied von 9
- 53: Betätigungsmittel von 9
- 54: Rohrabschnitt von 9
- 55: Schieber von 9
- 56, 57: Aktuator von 9
- 58: Gestänge von 9
- 59: Schwimmbehälter
- U: Umfangswand
- 60: Schwimmkörper von 59
- 61: Oberseite von 7
- 62: Rückhaltemittel an 6
- 63: Anschlag an 6
- 64: Decke von 7
- 65: Öffnung in 64
- 66: Oberkante von 6
- 67: Leitströmung in 3
- 68: Unterseite von 7
- 69: Gitterboden von 6
- 70: Rechen von 32
- 71: Streichwehr
- 72: Kanal zwischen Schacht 6 und Umwandung U
- 73: Zufuhrkanal zu 33
- 74, 75: Führungsnuten an 12 bzw. 13
- 76: Innenseite von 12
- 77, 78: Führung in 12
- 79: Einlauf des Versorgungskanals 50
- 80: Gitterstruktur von 70
- 81: Strebe von 80
- 82: Querbalken von 70
- 83: erster Kamm von 70
- 84: zweiter Kamm von 70
- x: Pfeilrichtung x
- x': Pfeilrichtung
- 85, 86: Bohrung in 83, 84
- 87: freies Ende von 81
- 88, 89: dreispurige Führungsschiene
- 90: Doppelschieber

- R: Ringspalt zwischen 6 und 7

- 107: Behälter
- 114: Transportraum von 107
- 118: Wandung von 107
- 161: Oberseite von 107
- 165: Öffnung von 107

- a161: Abstand zwischen 165 und 118
- H: Horizontale
- R161: kreisringförmig umlaufende Rampe an 107
- W: Wasser
- α: Neigung von R161 zur Horizontalen

## Patentansprüche

1. Fischlift (1) zum Transport von Fischen (2) zwischen einem Oberwasser (3) einer Staustufe (4) und einem Unterwasser (5) der Staustufe (4) umfassend
- einen Schacht (6) und einen Behälter (7; 107),
- wobei der Schacht (6) eine unter einem Niveau (N3) des Oberwassers (3) liegende obere Öffnung (8) mit einem oberen Schleusenausgang (9) umfasst,
- wobei der Schacht (6) eine unter einem Niveau (N5) des Unterwassers (5) liegende untere Öffnung (10) mit einem unteren Schleuseneingang (11) umfasst,
- wobei der Behälter (7; 107) zwischen einer oberen Stellung (S3) und einer unteren Stellung (S5) verfahrbar ist,
wobei der Behälter (7; 107) einen Transportraum (14; 114) umfasst,
- wobei der Behälter (7; 107) eine erste seitliche Öffnung (19) und eine zweite seitliche Öffnung (20) in einer Wandung (18; 118) des Behälters (7; 107) aufweist und diese von außen in den Transportraum (14; 114) führen,
- wobei die seitlichen Öffnungen (19, 20) derart angeordnet sind, dass diese in der oberen Stellung (S3) des Behälters (7; 107) unter dem Niveau (N3) des Oberwassers (3) liegen und dass diese in der unteren Stellung (S5) des Behälters (7; 107) unter dem Niveau (N5) des Unterwassers (5) liegen,
**dadurch gekennzeichnet,**
- **dass** der Behälter (7; 107) in dem Schacht (6) an wenigstens zwei Schienen (12, 13) derart geführt ist, dass in der oberen Stellung (S3), in der unteren Stellung (S5) und in jeder zwischen der oberen und der unteren Stellung (S3, S5) liegenden Zwischenstellung ein Kontakt zwischen dem Behälter (7; 107) und einer Innenwand (6') des Schachts (6) vermieden ist
- **dass** die erste seitliche Öffnung (19) des Behälters (7; 107) zu dem Transportraum (14; 114) in jeder Zwischenstellung des Behälters (7; 107) gegenüber dem den Behälter (7; 107) umgebenden Innenraum (22) des Schachts (6) durch die erste Schiene (12) verschlossen ist und
- **dass** die zweite seitliche Öffnung (20) des Behälters (7; 107) zu dem Transportraum (14; 114) in jeder Zwischenstellung des Behälters (7; 107) gegenüber dem den Behälter (7; 107) umgebenden Innenraum (22) des Schachts (6) durch die zweite Schiene (13) verschlossen ist.

2. Fischlift nach Anspruch 1, **dadurch gekennzeichnet, dass** der Behälter (7; 107) an zwei sich gegenüber liegenden Schienen (12, 13) geführt ist.

3. Fischlift nach Anspruch 1, **dadurch gekennzeichnet, dass** die erste seitliche Öffnung (19) des Behälters (7; 107) in der oberen Stellung (S3) des Behälters (7; 107) dem Schleusenausgang (9) und der oberen Öffnung des Schachts (6) derart gegenüber liegt, dass bei geöffnetem Schleusenausgang (9) eine gegenüber einem den Behälter (7; 107) umgebenden Innenraum (22) des Schachts (6) abgeschirmte Verbindung zum Oberwasser (3) besteht, und dass die zweite seitliche Öffnung (20) des Behälters (7; 107) in der unteren Stellung (S5) des Behälters (7; 107) dem Schleuseneingang (11) und der unteren Öffnung (10) des Schachts (6) derart gegenüber liegt, dass bei geöffnetem Schleuseneingang (11) eine gegenüber dem den Behälter (7; 107) umgebenden Innenraum (22) des Schachts (6) abgeschirmte Verbindung zum Unterwasser (5) besteht.

4. Fischlift nach wenigstens einem der vorhergehenden Ansprüche, **dadurch gekennzeichnet, dass** der Fischlift (1) einen Ablass- und Spülkanal (40) umfasst, wobei der Ablass- und Spülkanal (40) den Innenraum (22) des Schachts (6) mit dem Unterwasser (5) unter Umgehung einer im Unterwasser (5) vor dem Schleuseneingang (11) liegenden Einschwimmzone (21) derart verbindet, dass unter dem Behälter (7; 107) in dem Schacht (6) befindliches Wasser beim Absenken des Behälters (7; 107) aus dem Schacht (6) ableitbar ist und hierdurch ein Bodenbereich des Schachts (6) spülbar ist.

5. Fischlift nach wenigstens einem der vorhergehenden Ansprüche, **dadurch gekennzeichnet, dass** die erste Schiene (12) eine Führung für Leitwasser einer ersten Leitwasserversorgung (32) bildet, wobei die erste Leitwasserversorgung (32) insbesondere einen Versorgungskanal (33), ein Versorgungskanalventil (34) und eine Leitwasserdüse (35) und/oder einen Rechen (70) umfasst.

6. Fischlift nach wenigstens einem der vorhergehenden Ansprüche, **dadurch gekennzeichnet, dass** der Schleusenausgang (9) in der ersten Schiene (12) angeordnet ist, wobei der Schleusenausgang (9) ein Sperrglied (52), Betätigungsmittel (53) für das Sperrglied (52) und einen Rohrabschnitt (54) umfasst.

7. Fischlift nach Anspruch 1 oder 2, **dadurch gekennzeichnet, dass** der Schleuseneingang (11) in der zweiten Schiene (13) angeordnet ist, wobei der Schleuseneingang (11) ein Sperrglied (24), Betätigungsmittel (25) für das Sperrglied (24) und einen Rohrabschnitt (23) umfasst.

8. Fischlift nach wenigstens einem der vorhergehenden Ansprüche, **dadurch gekennzeichnet, dass** der Behälter (7; 107) als Schwimmbehälter (59) ausgebildet ist und insbesondere wenigstens einen Schwimmkörper (60) umfasst, durch welchen der Behälter (7; 107) seinen Auftrieb erhält, wobei der Schwimmkörper (60) insbesondere als Luftkammer ausgebildet ist.

9. Fischlift nach wenigstens einem der vorhergehenden Ansprüche, **dadurch gekennzeichnet, dass** der Fischlift (1) eine zweite Leitwasserversorgung (49) umfasst, wobei die zweite Leitwasserversorgung (49) einen Versorgungskanal (50) und insbesondere auch ein Versorgungskanalventil (51) umfasst, wobei der Versorgungskanal (50) derart stromabwärts vor dem Schleuseneingang (11) mündet, dass im Unterwasser (5) auch dann eine Leitströmung (31) aufrecht erhalten werden kann, wenn der Schleuseneingang (11) geschlossen ist.

10. Fischlift nach wenigstens einem der vorhergehenden Ansprüche, **dadurch gekennzeichnet, dass** der Fischlift (1) ein Rückhaltemittel (62), insbesondere einen Anschlag (63) umfasst, durch welches der Behälter (7; 107) derart unterhalb des Niveaus (N3) des Oberwassers (3) gehalten wird, dass zuströmendes Oberwasser (3) insbesondere durch eine Öffnung (65; 165) in einer Decke (64) des Behälters (7; 107) nach oben aus dem Behälter (7; 107) heraus quillt.

11. Fischlift nach Anspruch 1 oder 2, **dadurch gekennzeichnet, dass** die erste Schiene (12) eine obere Schienenöffnung (12') umfasst, welche durch den Schleusenausgang (9) verschließbar ist, und dass die zweite Schiene (13) eine untere Schienenöffnung (13') umfasst, welche durch den Schleuseneingang (11) verschließbar ist.

12. Fischlift nach Anspruch 5, **dadurch gekennzeichnet, dass** die erste Schiene (12) eine untere Schienenöffnung (37) umfasst, in welcher die Leitwasserdüse (35) und/oder der Rechen (70) der ersten Leitwasserversorgung (32) angeordnet ist.

13. Verfahren zum Betrieb eines Fischlifts entsprechend einem der vorhergehenden Ansprüche, **dadurch gekennzeichnet,**
- **dass** bei geöffnetem Schleuseneingang (11) und bei in der unteren Stellung (S5) befindlichem Behälter (7; 107) der Transportraum (14; 114) des Behälters (7; 107) über die erste Leitwasserversorgung (32) mit Oberwasser (3) durchströmt wird, wobei das Oberwasser (3) durch die Leitwasserdüse (35) in die erste Öffnung (19) des Behälters (7; 107) einströmt und durch die zweite Öffnung (20) des Behälters (7; 107) und den Schleuseneingang (11) in die vor dem Schleuseneingang (11) liegende Einschwimmzone (21) ausströmt und sich so die Leitströmung (31) einstellt, welche die Fische (2) aus der Einschwimmzone (21) in den Behälter (7; 107) leitet,
- **dass** zum Anheben des Behälters (7; 107) in die obere Stellung (S3) der Schleuseneingang (11) geschlossen wird, so dass sich der Wasserstand in dem Innenraum (22) des Schachts (6) erhöht und der Behälter (7; 107) nach oben schwimmt,
- **dass** nach dem Schließen des Schleuseneingangs (11) unter Verwendung der zweiten Leitwasserversorgung (49) Oberwasser (3) vor dem Schleuseneingang (11) in den Einschwimmbereich (21) geleitet wird, um den Einschwimmbereich (21) für die Fische attraktiv zu halten,
- **dass** der Behälter (7; 107) bei steigendem Wasserstand in dem Schacht (6) so lange nach oben schwimmt bis dieser durch das Rückhaltemittel (62) in seiner oberen Stellung (S3) blockiert wird,
- **dass** in der oberen Stellung (S3) der Schleusenausgang (9) geöffnet wird, so dass sich durch das in den Transportraum (14; 114) einströmende und über die obere Öffnung (65; 165) des Behälters (7; 107) überlaufende Oberwasser (3) die Leitströmung (67) einstellt, welche die Fische (2) zum Ausschwimmen in das Oberwasser (3) veranlasst,
- **dass** nach einem Schließen des Schleusenausgangs (9) zum Absenken des Behälters (7; 107) aus der oberen Stellung (S3) in die untere Stellung (S5) der Ablass- und Spülkanal (40) geöffnet wird, durch welchen das in dem Innenraum (22) des Schachts (6) befindliche Wasser an der Einschwimmzone (21) vorbei in das Unterwasser (5) abgeleitet wird und
- **dass** nach dem vollständigen Absenken des Behälters (7; 107) in die untere Stellung (S3) der Schleuseneingang (11) geöffnet, die erste Leitwasserversorgung (32) aktiviert und die zweite Leitwasserversorgung (49) deaktiviert wird.

## Claims

1. Fish lift (1) for transporting fish (2) between a headwater (3) of a barrage (4) and a tailwater (5) of the barrage (4), comprising
- a shaft (6) and a container (7; 107),
- wherein the shaft (6) comprises an upper opening (8) situated below a level (N3) of the headwater (3) and having an upper lock outlet (9),
- wherein the shaft (6) comprises a lower opening (10) situated below a level (N5) of the tailwater (5) and having a lower lock inlet (11),
- wherein the container (7; 107) can be moved between an upper position (S3) and a lower position (S5),
- wherein the container (7; 107) comprises a transport compartment (14; 114),
- wherein the container (7; 107) has a first lateral opening (19) and a second lateral opening (20) in a wall (18; 118) of the container (7; 107) and these openings lead into the transport compartment (14; 114) from outside,
- wherein the lateral openings (19, 20) are arranged in such a way that they are situated below the level (N3) of the headwater (3) in the upper position (S3) of the container (7; 107) and that they are situated below the level (N5) of the tailwater (5) in the lower position (S5) of the container (7; 107),
**characterized**
- **in that** the container (7; 107) is guided in the shaft (6) on at least two rails (12, 13) in such a way that a contact between the container (7; 107) and an inner wall (6') of the shaft (6) is avoided in the upper position (S3), in the lower position (S5) and in each intermediate position situated between the upper and the lower position (S3, S5),
- **in that**, in each intermediate position of the container (7; 107), the first lateral opening (19) of the container (7; 107) leading to the transport compartment (14; 114) is closed with respect to the interior (22) of the shaft (6) that surrounds the container (7; 107) by the first rail (12), and
- **in that**, in each intermediate position of the container (7; 107), the second lateral opening (20) of the container (7; 107) leading to the transport compartment (14; 114) is closed with respect to the interior (22) of the shaft (6) that surrounds the container (7; 107) by the second rail (13).

2. Fish lift according to Claim 1, **characterized in that** the container (7; 107) is guided on two mutually opposite rails (12, 13).

3. Fish lift according to Claim 1, **characterized in that**, in the upper position (S3) of the container (7; 107), the first lateral opening (19) of the container (7; 107) is situated opposite the lock outlet (9) and the upper opening of the shaft (6) in such a way that, with the lock outlet (9) opened, there is a connection to the headwater (3) that is screened off from an interior (22) of the shaft (6) that surrounds the container (7; 107), and **in that**, in the lower position (S5) of the container (7; 107), the second lateral opening (20) of the container (7; 107) is situated opposite the lock inlet (11) and the lower opening (10) of the shaft (6) in such a way that, with the lock inlet (11) opened, there is a connection to the tailwater (5) that is screened off from the interior (22) of the shaft (6) that surrounds the container (7; 107).

4. Fish lift according to at least one of the preceding claims, **characterized in that** the fish lift (1) comprises a drainage and flushing channel (40), wherein the drainage and flushing channel (40) connects the interior (22) of the shaft (6) to the tailwater (5) while bypassing a swim-in zone (21) situated in the tailwater (5) ahead of the lock inlet (11) in such a way that, when lowering the container (7; 107), water situated below the container (7; 107) in the shaft (6) can be discharged from the shaft (6) and consequently a bottom region of the shaft (6) can be flushed.

5. Fish lift according to at least one of the preceding claims, **characterized in that** the first rail (12) forms a guide for guide water of a first guide water supply (32), wherein the first guide water supply (32) comprises in particular a supply channel (33), a supply channel valve (34) and a guide water nozzle (35) and/or a rake (70) .

6. Fish lift according to at least one of the preceding claims, **characterized in that** the lock outlet (9) is arranged in the first rail (12), wherein the lock outlet (9) comprises a blocking member (52), actuating means (53) for the blocking member (52), and a tubular portion (54) .

7. Fish lift according to Claim 1 or 2, **characterized in that** the lock inlet (11) is arranged in the second rail (13), wherein the lock inlet (11) comprises a blocking member (24), actuating means (25) for the blocking member (24), and a tubular portion (23).

8. Fish lift according to at least one of the preceding claims, **characterized in that** the container (7; 107) is designed as a floating container (59) and in particular comprises at least one floating body (60) by means of which the container (7; 107) obtains its buoyancy, wherein the floating body (60) is designed in particular as an air chamber.

9. Fish lift according to at least one of the preceding claims, **characterized in that** the fish lift (1) comprises a second guide water supply (49), wherein the second guide water supply (49) comprises a supply channel (50) and in particular also a supply channel valve (51), wherein the supply channel (50) opens downstream ahead of the lock inlet (11) in such a way that a guide flow (31) can be maintained in the tailwater (5) even when the lock inlet (11) is closed.

10. Fish lift according to at least one of the preceding claims, **characterized in that** the fish lift (1) comprises a retaining means (62), in particular a stop (63), by means of which the container (7; 107) is held below the level (N3) of the headwater (3) in such a way that inflowing headwater (3) gushes upwardly out of the container (7; 107) in particular through an opening (65; 165) in a ceiling (64) of the container (7; 107).

11. Fish lift according to Claim 1 or 2, **characterized in that** the first rail (12) comprises an upper rail opening (12') which can be closed by the lock outlet (9), and **in that** the second rail (13) comprises a lower rail opening (13') which can be closed by the lock inlet (11).

12. Fish lift according to Claim 5, **characterized in that** the first rail (12) comprises a lower rail opening (37) in which the guide water nozzle (35) and/or the rake (70) of the first guide water supply (32) are/is arranged.

13. Method for operating a fish lift according to one of the preceding claims, **characterized**
- **in that**, with the lock inlet (11) opened and with the container (7; 107) situated in the lower position (S5), headwater (3) flows via the first guide water supply (32) through the transport compartment (14; 114) of the container (7; 107), wherein the headwater (3) flows into the first opening (19) of the container (7; 107) through the guide water nozzle (35) and flows out into the swim-in zone (21) situated ahead of the lock inlet (11) through the second opening (20) of the container (7; 107) and the lock inlet (11), and there is thus established the guide flow (31) which guides the fish (2) from the swim-in zone (21) into the container (7; 107),
- **in that**, in order to raise the container (7; 107) into the upper position (S3), the lock inlet (11) is closed, with the result that the water level in the interior (22) of the shaft (6) increases and the container (7; 107) floats upwards,
- **in that**, after closing the lock inlet (11), headwater (3) is guided ahead of the lock inlet (11) into the swim-in region (21) using the second guide water supply (49) in order to keep the swim-in region (21) attractive to the fish,
- **in that**, with increasing water level in the shaft (6), the container (7; 107) floats upwards until such time that it is blocked by the retaining means (62) in its upper position (S3),
- **in that** the lock outlet (9) is opened in the upper position (S3), with the result that the headwater (3) which flows into the transport compartment (14; 114) and overflows via the upper opening (65; 165) of the container (7; 107) establishes the guide flow (67) which causes the fish (2) to swim out into the headwater (3),
- **in that**, after closing the lock outlet (9), to lower the container (7; 107) from the upper position (S3) into the lower position (S5), the drainage and flushing channel (40) is opened, through which channel the water situated in the interior (22) of the shaft (6) is discharged past the swim-in zone (21), into the tailwater (5), and
- **in that**, after completely lowering the container (7; 107) into the lower position (S3), the lock inlet (11) is opened, the first guide water supply (32) is activated and the second guide water supply (49) is deactivated.

## Revendications

1. Ascenseur à poissons (1) pour le transport de poissons (2) entre une eau en amont (3) d'un barrage (4) et une eau en aval (5) du barrage (4), comprenant
- un puits (6) et un container (7 ; 107),
- le puits (6) comprenant une ouverture supérieure (8) située en dessous d'un niveau (N3) de l'eau en amont (3), avec un sas de sortie supérieur (9),
- le puits (6) comprenant une ouverture inférieure (10) située en dessous d'un niveau (N5) de l'eau en aval (5), avec un sas d'entrée inférieur (11),
- le container (7 ; 107) pouvant être déplacé entre une position supérieure (S3) et une position inférieure (S5),
le container (7 ; 107) comprenant un espace de transport (14 ; 114),
- le container (7 ; 107) présentant une première ouverture latérale (19) et une deuxième ouverture latérale (20) dans une paroi (18 ; 118) du container (7 ; 107) et celles-ci conduisant depuis l'extérieur dans l'espace de transport (14 ; 114),
- les ouvertures latérales (19, 20) étant disposées de telle sorte qu'elles soient situées dans la position supérieure (S3) du container (7 ; 107) en dessous du niveau (N3) de l'eau en amont (3) et qu'elles soient situées dans la position inférieure (S5) du container (7 ; 107) en dessous du niveau (N5) de l'eau en aval (5),
**caractérisé en ce que**
- le container (7 ; 107) est guidé dans le puits (6) sur au moins deux rails (12, 13) de telle sorte que dans la position supérieure (S3), dans la position inférieure (S5) et dans chaque position intermédiaire située entre la position supérieure et la position inférieure (S3, S5), un contact entre le container (7; 107) et une paroi intérieure (6') du puits (6) soit évité,
- la première ouverture latérale (19) du container (7 ; 107) vers l'espace de transport (14 ; 114) est fermée par le premier rail (12) dans chaque position intermédiaire du container (7 ; 107) par rapport à l'espace interne (22) du puits (6) entourant le container (7 ; 107) et
- la deuxième ouverture latérale (20) du container (7 ; 107) vers l'espace de transport (14 ; 114) est fermée par le deuxième rail (13) dans chaque position intermédiaire du container (7 ; 107) par rapport à l'espace interne (22) du puits (6) entourant le container (7 ; 107).

2. Ascenseur à poissons selon la revendication 1, **caractérisé en ce que** le container (7 ; 107) est guidé au niveau de deux rails (12, 13) opposés l'un à l'autre.

3. Ascenseur à poissons selon la revendication 1, **caractérisé en ce que** la première ouverture latérale (19) du container (7 ; 107), dans la position supérieure (S3) du container (7 ; 107), est opposée au sas de sortie (9) et à l'ouverture supérieure du puits (6) de telle sorte que lorsque le sas de sortie (9) est ouvert, une liaison fermée par rapport à un espace interne (22) du puits (6) entourant le container (7 ; 107), soit établie avec l'eau en amont (3), et **en ce que** la deuxième ouverture latérale (20) du container (7 ; 107), dans la position inférieure (S5) du container (7 ; 107), est opposée au sas d'entrée (11) et à l'ouverture inférieure (10) du puits (6) de telle sorte que lorsque le sas d'entrée (11) est ouvert, une liaison fermée par rapport à l'espace interne (22) du puits (6) entourant le container (7 ; 107), soit établie avec l'eau en aval (5).

4. Ascenseur à poissons selon au moins l'une quelconque des revendications précédentes, **caractérisé en ce que** l'ascenseur à poissons (1) comprend un canal d'écoulement et de rinçage (40), le canal d'écoulement et de rinçage (40) reliant l'espace interne (22) du puits (6) avec l'eau en aval (5) en contournant une zone d'entrée des poissons (21) située dans l'eau en aval (5) avant le sas d'entrée (11), de telle sorte que l'eau se trouvant dans le puits (6) en dessous du container (7 ; 107), puisse être évacuée hors du puits (6) lors de l'abaissement du container (7 ; 107) et qu'une région du fond du puits (6) puisse ainsi être rincée.

5. Ascenseur à poissons selon au moins l'une quelconque des revendications précédentes, **caractérisé en ce que** le premier rail (12) forme un guide pour l'eau de guidage d'une première alimentation en eau de guidage (32), la première alimentation en eau de guidage (32) comprenant notamment un canal d'alimentation (33), une vanne de canal d'alimentation (34) et une buse d'eau de guidage (35) et/ou une grille de retenue (70).

6. Ascenseur à poissons selon au moins l'une quelconque des revendications précédentes, **caractérisé en ce que** le sas de sortie (9) est disposé dans le premier rail (12), le sas de sortie (9) comprenant un organe de blocage (52), un moyen d'actionnement (53) pour l'organe de blocage (52) et une portion tubulaire (54) .

7. Ascenseur à poissons selon la revendication 1 ou 2, **caractérisé en ce que** le sas d'entrée (11) est disposé dans le deuxième rail (13), le sas d'entrée (11) comprenant un organe de blocage (24), un moyen d'actionnement (25) pour l'organe de blocage (24) et une portion tubulaire (23).

8. Ascenseur à poissons selon au moins l'une quelconque des revendications précédentes, **caractérisé en ce que** le container (7 ; 107) est réalisé sous forme de container flottant (59) et comprend notamment au moins un flotteur (60) qui confère au container (7 ; 107) sa flottabilité, le flotteur (60) étant réalisé notamment sous forme de chambre à air.

9. Ascenseur à poissons selon au moins l'une quelconque des revendications précédentes, **caractérisé en ce que** l'ascenseur à poissons (1) comprend une deuxième alimentation en eau de guidage (49), la deuxième alimentation en eau de guidage (49) présentant un canal d'alimentation (50) et en particulier aussi une vanne de canal d'alimentation (51), le canal d'alimentation (50) débouchant en aval du sas d'entrée (11) de telle sorte qu'un écoulement de guidage (31) puisse alors également être maintenu dans l'eau en aval (5) lorsque le sas d'entrée (11) est fermé.

10. Ascenseur à poissons selon au moins l'une quelconque des revendications précédentes, **caractérisé en ce que** l'ascenseur à poissons (1) comprend un moyen de retenue (62), en particulier une butée (63) par laquelle le container (7 ; 107) est maintenu en dessous du niveau (N3) de l'eau en amont (3) de telle sorte que l'eau en amont affluant (3) en particulier à travers une ouverture (65 ; 165) dans un plafond (64) du container (7 ; 107) monte et sorte vers le haut hors du container (7 ; 107).

11. Ascenseur à poissons selon la revendication 1 ou 2, **caractérisé en ce que** le premier rail (12) comprend une ouverture de rail supérieure (12') qui peut être fermée par le sas de sortie (9), et **en ce que** le deuxième rail (13) comprend une ouverture de rail inférieure (13') qui peut être fermée par le sas d'entrée (11).

12. Ascenseur à poissons selon la revendication 5, **caractérisé en ce que** le premier rail (12) comprend une ouverture de rail inférieure (37) dans laquelle la buse d'eau de guidage (35) et/ou la grille de retenue (70) de la première alimentation en eau de guidage (32) sont disposées.

13. Procédé pour faire fonctionner un ascenseur à poissons selon l'une quelconque des revendications précédentes, **caractérisé en ce que**
- lorsque le sas d'entrée (11) est ouvert et que le container (7 ; 107) se trouve dans la position inférieure (S5), l'espace de transport (14 ; 114) du container (7 ; 107) est parcouru par l'eau en amont (3) par le biais de la première alimentation en eau de guidage (32), l'eau en amont (3) affluant à travers la buse d'eau de guidage (35) dans la première ouverture (19) du container (7 ; 107) et sortant à travers la deuxième ouverture (20) du container (7 ; 107) et le sas d'entrée (11) dans la zone d'entrée des poissons (21) située avant le sas d'entrée (11), et l'écoulement de guidage (31) s'établissant ainsi et guidant les poissons (2) hors de la zone d'entrée des poissons (21) jusque dans le container (7 ; 107),
- pour lever le container (7 ; 107) dans la position supérieure (S3), le sas d'entrée (11) est fermé, de telle sorte que le niveau d'eau dans l'espace interne (22) du puits (6) monte et que le container (7 ; 107) flotte vers le haut,
- après la fermeture du sas d'entrée (11), en utilisant la deuxième alimentation en eau de guidage (49), l'eau en amont (3) avant le sas d'entrée (11) est guidée dans la zone d'entrée des poissons (21), afin que la zone d'entrée des poissons (21) reste attrayante pour les poissons,
- le container (7 ; 107), lorsque le niveau d'eau monte dans le puits (6), flotte vers le haut jusqu'à ce que celui-ci soit bloqué par le moyen de retenue (62) dans sa position supérieure (S3),
- dans la position supérieure (S3), le sas de sortie (9) est ouvert, de telle sorte que l'eau en amont (3) affluant dans l'espace de transport (14 ; 114) et débordant par-dessus l'ouverture supérieure (65 ; 165) du container (7 ; 107), produise l'écoulement de guidage (67) qui incite les poissons (2) à sortir dans l'eau en amont (3),
- après une fermeture du sas de sortie (9) pour abaisser le container (7 ; 107) de la position supérieure (S3) dans la position inférieure (S5), le canal d'écoulement et de rinçage (40) est ouvert, l'eau se trouvant dans l'espace interne (22) du puits (6) étant déviée à travers celui-ci devant la zone d'entrée des poissons (21) dans l'eau en aval (5) et
- après l'abaissement complet du container (7 ; 107) dans la position inférieure (S3), le sas d'entrée (11) est ouvert, la première alimentation en eau de guidage (32) est activée et la deuxième alimentation en eau de guidage (49) est désactivée.
